# EUROPEAN PATENT APPLICATION

(11) **EP 4 610 835 A1**
(43) Date of publication of application: **03.09.2025**
(21) Application number: 23884453.4
(22) Date of filing: 07.09.2023
(51) Int. Cl.: G06F 12/06

(54) **MEMORY MANAGEMENT METHOD AND COMPUTING DEVICE**

(30) Priority: 04.11.2022 CN 202211376351
(71) Applicant: xFusion Digital Technologies Co., Ltd., Zhengzhou, Henan 450000 (CN)
(72) Inventor: YAO, Shuang, Zhengzhou, Henan 450000 (CN)
(74) Representative: MERH-IP Matias Erny Reichl Hoffmann Patentanwälte PartG mbB
(86) International application number: PCT/CN2023/117464
(87) International publication number: WO 2024/093517

(57) **Abstract**

The present application discloses a memory management method and a computing device. The method is applied to a computing device that includes at least one expanded memory. Specifically, the method includes: when detecting that a first expanded memory is connected, identifying a storage type of the first expanded memory, which is any one of the at least one expanded memory; if the first expanded memory is DRAM, using the first expanded memory as memory of a first NUMA node, where the first NUMA node is any NUMA node with a CPU; if the first expanded memory is PMEM or SCM, adding a second NUMA node, and using the first expanded memory as memory of the second NUMA node, where the second NUMA node has no CPU. By selecting different management and allocation methods based on different storage types of the expanded memory, the characteristic advantages of different storage types of the expanded memory can be fully and flexibly leveraged and the memory bandwidth can be maximized.

## Description

This application claims priority to Chinese Patent Application No. 202211376351.3, filed with the China National Intellectual Property Administration on November 04, 2022 and entitled "MEMORY MANAGEMENT METHOD AND COMPUTING DEVICE", which is incorporated herein by reference in its entirety.

### TECHNICAL FIELD

The present application relates to the field of computer technology, and in particular to, a memory management method and a computing device.

### BACKGROUND

The computer express link (computer express link, CXL) protocol, launched by Intel, is an open interconnection protocol that enables high-speed and efficient interconnection between a central processing unit (central processing unit, CPU) and a graphic processing unit (graphic processing unit, GPU), a field programmable gate array (field programmable gate array, FPGA), or other accelerators, thereby meeting the requirements for high-performance heterogeneous computing. The CXL protocol allows a CPU of a computing device to access device-attached memory by means of memory semantics without occupying a memory slot of the computing device.

After the launch of the CXL protocol, the industry has applied the CXL protocol to memory expansion scenarios to help servers, data centers, and other computing devices extend their memory capacities. In addition, a memory bandwidth is increased to increase the speed at which the CPU accesses each memory.

Currently, upon detecting that an expanded memory is connected according to the CXL protocol, a computing device uses the expanded memory as an independent node of a non-uniform memory access (non-uniform memory access, NUMA) architecture, so that the CPU can access the expanded memory.

However, when the CXL protocol supports the expansion of multiple storage types of memories, the management method that uses expanded memories as independent NUMA nodes fails to leverage the characteristic advantages of different storage types of memories.

### SUMMARY

Embodiments of the present application provide a memory management method and a computing device that, in memory expansion scenarios, can flexibly select different management methods based on different storage types of memories to maximize a memory bandwidth.

In a first aspect, embodiments of the present application provide a memory management method, applied to a computing device. The computing device includes at least one expanded memory, and the management method includes:

when detecting that a first expanded memory is connected, identifying a storage type of the first expanded memory, where the first expanded memory is any one of the at least one expanded memory; if the first expanded memory is dynamic random access memory (dynamic random access memory, DRAM), using the first expanded memory as memory of a first NUMA node, where the first NUMA node is any one node with a CPU; if the first expanded memory is persistent memory (persistent memory, PMEM) or storage-class memory (storage-class memory, SCM), adding a second NUMA node and using the first expanded memory as memory of the second NUMA node, where the second NUMA node has no CPU.

In the embodiments of the present application, when the computing device detects the first expanded memory having the storage type of DRAM, the computing device uses the DRAM as the memory of the first NUMA node to fully leverage high-bandwidth and low-latency characteristics of the DRAM and increase a speed at which the CPU accesses the expanded memory. When the computing device detects the first expanded memory having the storage type of the PMEM or the SCM, the computing device uses the PMEM or the SCM as the memory of the second NUMA node so that the expanded memory with a lower bandwidth and a higher latency is added to the second NUMA node without the CPU for management, and invoked and allocated when there is a need for slow processing. By implementing different management and allocation methods based on different storage types of expanded memories, the characteristic advantages of different storage types of the expanded memory can be fully and flexibly leveraged, thereby maximizing the memory bandwidth.

In a possible implementation, using the first expanded memory as the memory of the first NUMA node, specifically includes determining an address range of the first expanded memory and adding the address range to the memory of the first NUMA node.

In a possible implementation, using the first expanded memory as the memory of the second NUMA node, specifically includes determining an address range of the first expanded memory and adding the address range to the memory of the second NUMA node.

In the present application, the address range of the first expanded memory after unified addressing is first determined, and then the address range is added to the NUMA node for management, so that the CPU can directly access the first expanded memory by accessing the address range.
In a possible implementation, the computing device also includes a memory expander. The at least one expanded memory includes N second expanded memories connected to the computing device by the memory expander. The first expanded memory is any one of the N second expanded memories, where N is greater than 1. Determining the address range of the first expanded memory includes obtaining, by unified extensible firmware (UEFI) firmware, N segments of address ranges corresponding to the N second expanded memories; obtaining, from the memory expander, capacities of the N second expanded memories; and determining, based on the N capacities and the N segments of address ranges, the address range of the first expanded memory.

In the present application, after the N segments of address ranges corresponding to N second expanded memories and the capacity of each second expanded memory are obtained, the address range corresponding to each second expanded memory can be identified according to a matching relationship between the capacities and address ranges, thereby determining the address range of the first expanded memory.

In a possible implementation, determining, based on the N capacities and the N segments of address ranges, the address range of the first expanded memory, specifically includes: if a capacity of the first expanded memory is different from capacities of other expanded memories among the N second expanded memories, determining the address range of the first expanded memory by matching the N segments of address ranges according to the capacity of the first expanded memory; or, if a capacity of the first expanded memory is same as a capacity of at least one of the N second expanded memories, obtaining memory numbers of the N second expanded memories; and determining the address range of the first expanded memory according to a sequence of the N memory numbers, a sequence of the N segments of address ranges, and a memory number of the first expanded memory.

In the present application, by directly matching the address ranges according to the capacities and matching the address ranges of the second expanded memories with the memory numbers of the second expanded memories, the computing device may accurately identify the storage type of the first expanded memory under different capacity relations between the first expanded memory and the other expanded memories.

In a possible implementation, the first NUMA node is a NUMA node that is closest to the first expanded memory among the NUMA nodes with CPUs.

In the present application, by adding the expanded memory as a memory partition to the NUMA node with a CPU that is closest to the first expanded memory, the speed at which the CPU accesses the expanded memory can be further increased, the bandwidth of the CPU in the NUMA node can be improved, and the latency for the CPU to access the expanded memory can be reduced.

In a possible implementation, after using the first expanded memory as the memory of the second NUMA node, the method further includes migrating cold data to the memory of the second NUMA node and migrating hot data to the memory of the NUMA node with the CPU.

In the embodiments of the present application, cold data, which is infrequently active and not often accessed, is migrated to the memory of the second NUMA node far from the CPU. The large capacity of the PMEM and the SCM can provide a large amount of space for hot data that is frequently active and often accessed, so that a large amount of hot data can be stored in the memory of the NUMA node with a CPU featuring a lower latency and a higher bandwidth. With a closer distance between the CPU and the storage location of the hot data, an access speed of the CPU to hot data and a response speed to frequent service demands for hot data are increased.

In a possible implementation, the expanded memory includes at least one of the PMEM and the SCM, and the DRAM. After using the DRAM as the memory of the first NUMA node and using at least one of the PMEM and the SCM as the memory of the second NUMA node, the method further includes migrating cold data to the memory of the second NUMA node and migrating hot data to the memory of the first NUMA node.

In a possible implementation, the computing device includes a local memory, and the at least one expanded memory includes the DRAM. After using the first expanded memory as the memory of the first NUMA node, the method further includes receiving a memory request sent by an application; if a usage rate of the local memory is less than a usage threshold, allocating, according to the memory request, the local memory to the application; and if the usage rate of the local memory is greater than the usage threshold and less than 100%, allocating, according to the memory request, based on a proportion of available local memory to available DRAM, the local memory and the DRAM to the application.

In a possible implementation, the at least one expanded memory also includes at least one of the PMEM and the SCM. After receiving a memory allocation request sent by the application, the method further includes: if the usage rates of the local memory and the DRAM are both 100%, allocating at least one of the PMEM and the SCM to the application according to the memory request.

In the present application, by selecting different memory allocation strategies based on the usage rate of the local memory, the high bandwidth and low latency characteristics of the local memory and the DRAM or HBM in the first NUMA node can be fully utilized to maximize the memory bandwidth and improve a response speed and a processing speed of the CPU to the application.

In a possible implementation, the at least one expanded memory communicates data with a processor of the computing device according to a CXL protocol.

In a second aspect, the embodiments of the present application provide a computing device that includes a processor and at least one expanded memory.

The processor is configured to, when detecting that a first expanded memory is connected, identify a storage type of the first expanded memory, and the first expanded memory is any one of the at least one expanded memory; the processor is further configured to, when the first expanded memory is DRAM, use the first expanded memory as memory of a first NUMA node; and the first NUMA node is any one node with a CPU; and the processor is further configured to, when the first expanded memory is PMEM or SCM, add a second NUMA node, and use the first expanded memory as memory of the second NUMA node, and the second NUMA node has no CPU.

In a possible implementation, the processor is specifically configured to, when the first expanded memory is the DRAM, determine an address range of the first expanded memory, and add the address range to the memory of the first NUMA node.

In a possible implementation, the processor is specifically configured to, when the first expanded memory is the PMEM or the SCM, determine an address range of the first expanded memory; and add the address range to the memory of the second NUMA node.

In a possible implementation, the computing device further includes a memory expander, the at least one expanded memory includes N second expanded memories connected to the computing device by the memory expander. The first expanded memory is any one of the N second expanded memories, where N is greater than 1. The processor is specifically configured to obtain, by UEFI firmware, N segments of address ranges corresponding to the N second expanded memories; obtain, from the memory expander, capacities of the N second expanded memories; and determine, based on the N capacities and the N segments of address ranges, the address range of the first expanded memory.

In a possible implementation, the processor is specifically configured to, when a capacity of the first expanded memory is different from capacities of other expanded memory among the N second expanded memories, determine the address range of the first expanded memory by matching the N segments of address ranges according to the capacity of the first expanded memory; or, the processor is specifically configured to, when a capacity of the first expanded memory is same as a capacity of at least one of the N second expanded memories, obtain memory numbers of the N second expanded memories; and determine the address range of the first expanded memory according to a sequence of the N memory numbers, a sequence of the N segments of address ranges, and a memory number of the first expanded memory.

In a possible implementation, the first NUMA node is a NUMA node that is closest to the first expanded memory among NUMA nodes with CPUs.

In a possible implementation, the processor is also configured to migrate cold data to the memory of the second NUMA node, and migrate hot data to the memory of NUMA nodes with the CPU.

In a possible implementation, the expanded memory includes at least one of the PMEM and the SCM, as well as the DRAM. The processor is also configured to migrate cold data to the memory of the second NUMA node, and migrate hot data to the memory of the first NUMA node.

In a possible implementation, the computing device includes a local memory, and the at least one expanded memory includes the DRAM. The processor is further configured to receive a memory request sent by an application; if a usage rate of the local memory is less than a usage threshold, allocate, according to the memory request, the local memory to the application; and if the usage rate of the local memory is greater than the usage threshold and less than 100%, allocate, according to the memory request, the local memory and the DRAM to the application based on a proportion of available local memory to available DRAM.

In a possible implementation, the at least one expanded memory also includes at least one of the PMEM and the SCM. The processor is further configured to, if the usage rates of the local memory and the DRAM are both 100%, allocate, according to the memory request, at least one of the PMEM and the SCM to the application.

In a possible implementation, the at least one expanded memory communicates data with the processor according to the CXL protocol.

In a third aspect, the embodiments of the present application provide a computer-readable storage medium, which includes instructions that, when executed on a computer, enable the computer to perform the method described in the first aspect.

The solutions provided in the second and third aspects are used to implement or assist in implementing the method provided in the first aspect, so as to achieve a same or corresponding beneficial effect as the first aspect, which are not described herein again.

### BRIEF DESCRIPTION OF DRAWINGS

FIG. 1 is a system architecture diagram for a memory expansion scenario provided by an embodiment of the present application;
FIG. 2 is a schematic structural diagram of a memory management system using a CXL protocol provided by an embodiment of the present application;
FIG. 3 is a schematic flowchart of a memory management method provided by an embodiment of the present application;
FIG. 4 is a schematic flowchart of a method for identifying an address range of an expanded memory provided by an embodiment of the present application; and
FIG. 5 is a schematic flowchart illustrating a process of an application to request memory allocation provided by an embodiment of the present application.

### DESCRIPTION OF EMBODIMENTS

The following describes embodiments of the present application with reference to accompanying drawings. Apparently, the described embodiments are some but not all of the embodiments of the present application. A person of ordinary skill in the art may know that, with the development of technology and emergence of new service scenarios, the technical solutions provided in embodiments of the present application are also applicable to a similar technical problem.

In the description, claims, and accompanying drawings of the present application, terms such as "first" and "second" are intended to distinguish between similar objects, but do not necessarily indicate a specific order or sequence. It should be understood that the terms used in such a way are interchangeable in proper circumstances. This is merely a distinguishing manner that is used when objects having a same attribute are described in the embodiments of the present application. In addition, the terms "include", "have", and any other variants thereof are intended to cover the non-exclusive inclusion, so that a process, method, system, product, or device that includes a series of steps or units is not necessarily limited to those steps or units, but may include other units not expressly listed or inherent to such a process, method, system, product, or device.

With the development of artificial intelligence and big data, there is an explosive growth in data volume, requiring computing devices such as servers and data centers to have higher-capacity memory and faster processors to meet various service demands. Although the quantity of CPU cores is growing rapidly with the continuous development of processor technology, due to a limited quantity of package pins on the CPU and limited space on the mainboard of a computing device, it is challenging to continuously increase memory channels, causing CPU cores to wait for memory data to load in data-intensive processing scenarios. It is evident that the memory bandwidth cap limits the processing speed of a CPU, leading to greater demands for larger memory capacity and memory bandwidth from a computing device.

The compute express link (computer express link, CXL) protocol, launched by Intel, is an open interconnection protocol that enables high-speed and efficient interconnection between CPUs and GPUs, FPGAs, or other accelerators, thereby meeting requirements for high-performance heterogeneous computing. The CXL protocol supports the CPU of the computing device accessing the attached memory on other devices connected by means of memory semantics without occupying a memory slot of the computing device.

In other words, a device that supports the CXL protocol (hereinafter referred to as "CXL device") can be connected to a computing device and used as an expanded memory. The computing device can access the memory of the CXL device according to the CXL protocol, just as the computing device accesses local memory through memory channels within the computing device. Specifically, the CXL protocol allows a dynamic random access memory (dynamic random access memory, DRAM), a high bandwidth memory (high bandwidth memory, HBM), a persistent memory (PMEM), and a storage-class memory (storage-class memory, SCM) to be used as an expanded memory.

Therefore, the computing device, by using the CXL protocol and CXL devices configured with memory as a way to expand memory, expands the memory capacity and memory bandwidth, solving the memory problems.

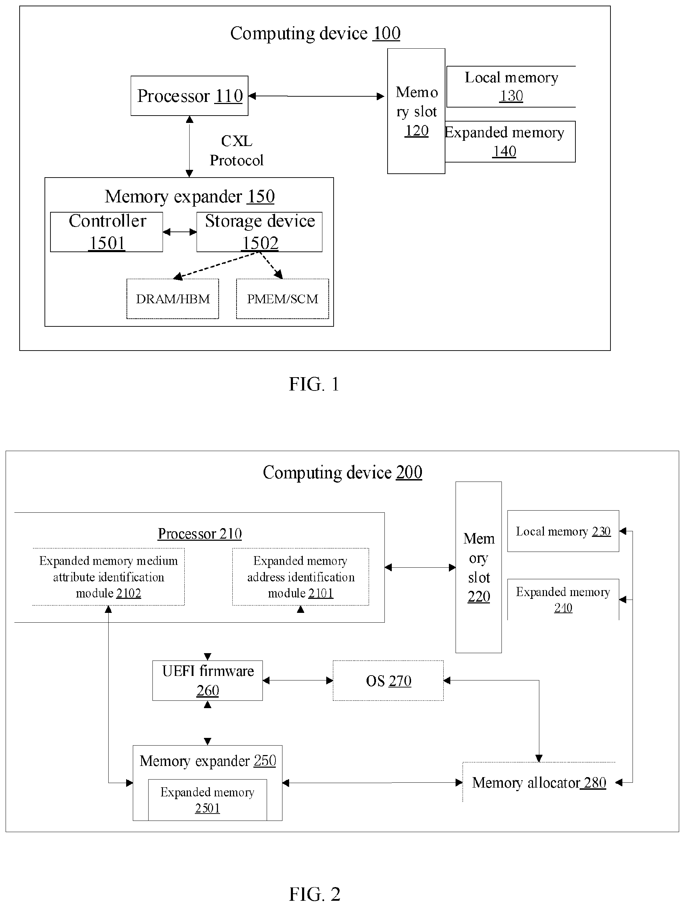

Reference may be made to FIG. 1. FIG. 1 is a system architecture diagram for a memory expansion scenario provided by an embodiment of the present application. The system architecture is primarily applied to a computing device 100. The computing device 100 may be a server, data center, or other computing devices with memory expansion requirements. A specific form of the computing device 100 shown in FIG. 1 is not limited in the embodiment of the present application. As shown in FIG. 1, the computing device 100 includes a processor 110, a memory slot 120, a local memory 130, an expanded memory 140, and a memory expander 150.

The processor 110 includes one or more CPUs, which are configured to read from and write to the local memory 130 and the expanded memory 140 based on application requirements, or read from and write to a storage device 1502 by using the memory expander 150 and the CXL protocol.

The local memory 130 and the expanded memory 140 are connected to the computing device 100 by the memory slot 120.

The local memory 130 is DRAM connected to the computing device 100 by the memory slot 120.

The expanded memory 140 is PMEM or any other storage device with a storage type other than DRAM, which is connected to the computing device 100 by the memory slot 120. Understandably, the expanded memory 140 can communicate data with the processor according to the CXL protocol.

The memory expander 150 is configured to connect the storage device 1502 to the computing device 100 and provide an access channel that supports the CXL protocol, allowing the processor 110 to access the storage device 1502 according to the CXL protocol. In other words, the memory expander 150 can be connected to the computing device 100 as an expanded memory according to the CXL protocol, thereby increasing a memory capacity of the computing device 100 by an order of magnitude and significantly extending a memory bandwidth. Specifically, the CXL protocol allows the computing device 100 to increase its memory capacity to tens of terabytes (terabyte, TB) by the memory expander 150 and its memory bandwidth to the order of TB per second.

The memory expander 150 includes a controller 1501 and a storage device 1502. The controller 1501 is configured to identify the storage device 1502 connected to the memory expander 150 and to obtain and save information such as medium attributes, a capacity, and an address range of the memory in the storage device 1502.

The memory expander 150 is a CXL device configured with memory, and the storage device 1502 is one or more storages in the CXL device. Understandably, in the embodiment shown in FIG. 1, a CXL protocol used for data communication between the processor 110 and the storage device 1502 is merely an example and not a limitation. The processor 110 may also use other protocols that support DRAM, PMEM, and SCM as an expanded memory to communicate data with the storage device 1502.

The memory expander 150 may specifically be a GPU, FPGA, or any other accelerator. The storage device 1502 may be a DRAM, PMEM or SCM. Understandably, with the development of technology, the storage device 1502 may also be other storage types of memories or drives.

It should be noted that, in a specific implementation, the computing device 100 may be any device that includes a similar structure to that shown in FIG. 1. The specific structure of the computing device 100 is not limited by the embodiments of the present application. Furthermore, the structure shown in FIG. 1 is not intended to limit the computing device 100. The computing device 100 may include more or fewer components apart from that are illustrated in FIG. 1, or certain components may be combined, or there may be a different arrangement of the components. For example, a positional relation between the memory expander 130 and the computing device 100 in FIG. 1 is merely an example. The memory expander 130 may also be configured outside the computing device 100.

However, current memory management methods lack diversity. For different storage types of storage devices 1502, the computing device 100 adds a new non-uniform memory access (non-uniform memory access, NUMA) node during system initialization, and uses the storage device 1502 as the memory of the new NUMA node.

Therefore, when the expanded memory is DRAM, the processor 110 has to cross different NUMA nodes to access the expanded memory in the new NUMA node, resulting in a higher latency.

It is evident that there is an urgent need for a memory management method that adapts to a memory expansion scenario with the support of the CXL protocol, in order to flexibly manage expanded memories with different storage types and maximize the memory bandwidth.

Before introducing the memory management method provided in the embodiment of the present application, based on the computing device 100 shown in FIG. 1, the following further describes a computing device used to implement the memory management method. Reference may be made to FIG. 2. FIG. 2 is a schematic structural diagram of a memory management system using a CXL protocol provided by an embodiment of the present application. A computing device 200 includes a processor 210, a memory slot 220, a local memory 230, an expanded memory 240, a memory expander 250, a unified extensible firmware interface (unified extensible firmware interface, UEFI) firmware 260, an operating system (operating system, OS) 270, and a memory allocator 280.

Understandably, the solid lines box in FIG.2 represents hardware, and the dashed lines box represents software.

The computing device 200 adopts a NUMA architecture. During a system initialization stage, the computing device 200 allocates one or more CPUs of the processor 210 and the local memory 230 to one or more NUMA nodes.

The processor 210 includes an expanded memory address identification module 2101 and an expanded memory medium attribute identification module 2102. The two modules are configured to identify storage types of the expanded memory 240 and an expanded memory 2501. The expanded memory 240 is non-DRAM memory connected to the computing device 200 by means of the memory slot 220, and the expanded memory 2501 is a storage device connected to the computing device 200 by the memory expander 250. Understandably, the expanded memory described below may refer to either the expanded memory 240 or the expanded memory 2501.

The processor 210 may communicate data with the expanded memory according to the CXL protocol.

The UEFI firmware 260 is a storage device for storing a UEFI code, which may specifically be a southbridge chip on the mainboard of the computing device 200, or other storage devices in the computing device 200.

The expanded memory 240 and the expanded memory 2501 connected to the computing device 200 are identified as having a 'soft reserved' attribute. The expanded memory address identification module 2101 is configured to identify an expanded memory with a 'soft reserved' attribute during the memory initialization stage. After identifying the expanded memory, the UEFI firmware 260 is configured to obtain a memory attribute, a memory capacity, and an overall contiguous address range of the expanded memory by means of the getmemorymap() function. The UEFI firmware 260 then reports memory information of the expanded memory and the local memory, as well as a memory map, to the OS 270. The OS 270 records the memory information of the expanded memory and the local memory, and the memory map in an E820 table of the kernel based on the memory attribute, before further adding the memory information to the memory allocator 280.

The expanded memory address identification module 2101 is also configured to obtain an address range corresponding to each expanded memory by means of the UEFI firmware 260. Understandably, the address range has been uniformly addressed by the computing device 200 before assigning to each expanded memory.

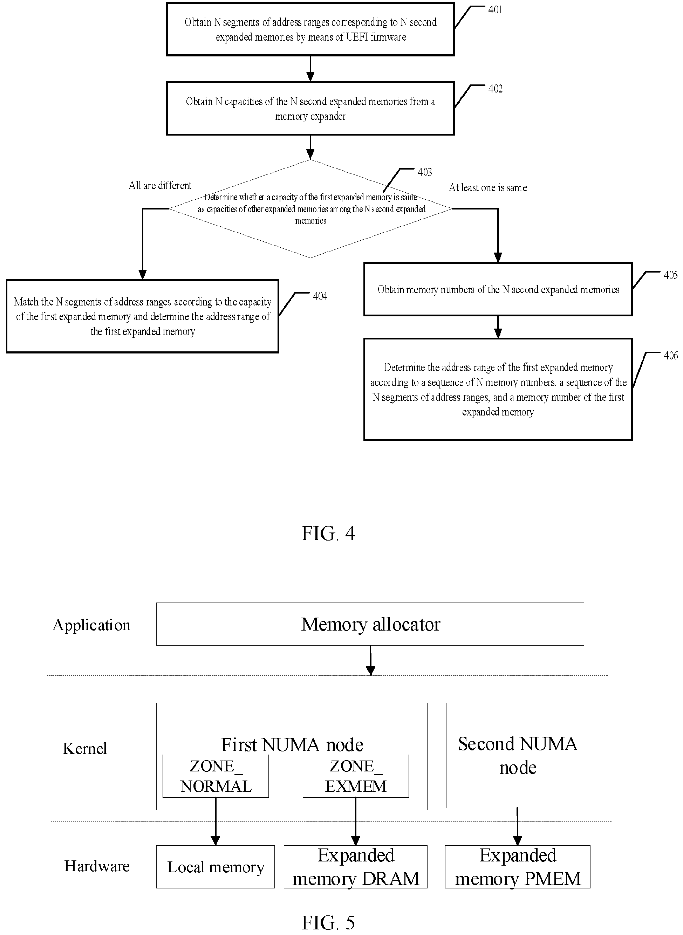

For the specific method by which the expanded memory address identification module 2101 obtains the address range corresponding to each expanded memory, reference may be made to the relevant description in step 401 of an embodiment of the present application shown in FIG. 4, which is not described herein again.

Understandably, the expanded memory address identification module 2101 is unable to perceive the storage type of the memory, and further steps are needed to distinguish the storage types of the expanded memories corresponding to each address range.

Understandably, the computing device 200 directly obtains a storage type and a corresponding address range of the expanded memory 240 connected via the memory slot 220.

In this case, the expanded memory medium attribute identification module 2102 is configured to identify a storage type and a capacity of the expanded memory 2501.

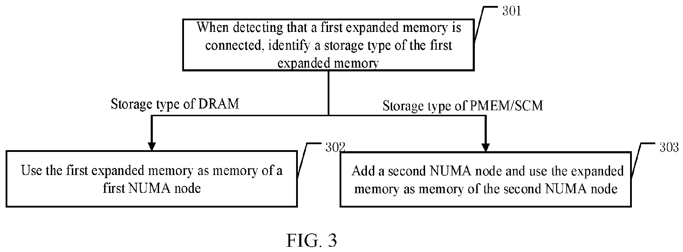

In this case, for details on how expanded memory address identification module 2101 specifically obtains the storage type and capacity corresponding to each expanded memory, reference may be made to the description in step 301 of an embodiment of the present application shown in FIG. 3, which is not described herein again.

The processor 210 is also configured to determine an address range of each expanded memory according to a capacity, and then use the expanded memories of different storage types as memory of different NUMA nodes by allocating the address ranges of the expanded memories to NUMA nodes, achieving flexible management.

Specifically, when the storage type of the expanded memory is DRAM, the processor 210 is also configured to use the expanded memories as memory of a NUMA node with a CPU.

For an expanded memory with a storage type of PMEM or SCM, the processor 210 is also configured to use the expanded memories as memory of one or more new NUMA nodes.

The memory allocator 280 is configured to initiate a memory request to the OS 270 kernel based on the memory requirements from the application after unified management over local and expanded memories by the computing device 200.

The OS 270 kernel is configured to allocate the local memory 230 and the expanded memories to the application based on the memory request.

Reference may be made to FIG. 3. FIG. 3 is a schematic flowchart of a memory management method provided by an embodiment of the present application. The method is used for the computing device in the scenario shown in FIG. 1 or in the system shown in FIG. 2, specifically including steps 301 to 303.

301. When detecting that a first expanded memory is connected, identify a storage type of the first expanded memory.

In this case, the computing device includes at least one expanded memory, and the first expanded memory is any one of the at least one expanded memory. That is, when the computing device detects that one or more expanded memories are connected, each expanded memory may sequentially act as the first expanded memory to perform steps 301 to 303.

In this case, the expanded memory refers to a memory connected to the computing device by means of a memory slot or a memory expander, in addition to the local memory. Specifically, the expanded memory may be a DRAM connected by means of the memory slot, or a DRAM, PMEM or SCM connected by means of the memory expander.

In a possible implementation, the expanded memory communicates data with the computing device according to the CXL protocol. For clarity and concise description, the following describes a possible implementation where the expanded memory and the computing device communicate data according to the CXL protocol. Understandably, this is an example rather than a limitation. When the embodiments of the present application adopt other possible protocols to perform data transfer between the expanded memory and the computing device, adaptive changes may be made.

Specifically, the CXL.memory protocol in the CXL protocol allows the computing device to access the memory of the CXL device just as the computing device accesses the local memory.

In this case, the storage type of the expanded memory includes DRAM, PMEM, and SCM. Specifically, the storage type of the expanded memory may be divided into two groups. One is DRAM with a high-bandwidth and a low-latency. For example, a latency of the DRAM is in a range of 15 ns-100 ns, and a memory bandwidth of the DRAM reaches a range of 2.1 GB/s (single-channel DDR266) to 90 GB/s (dual-channel DDR5-6400). A memory bandwidth of a third-generation HBM consisting of DRAM chips stacked vertically, can reach 800 GB/s, with a latency within 100 ns-200 ns. The other group is PMEM and SCM with a lower bandwidth and a higher latency. For example, the PMEM has a latency in a range of 250 ns-500 ns and a bandwidth of 2 GB/s.

Understandably, the DRAM includes an HBM.

Understandably, with further advancements in technology, memory with new storage types emerges, or new protocols are developed to support more types of memory to be used in the memory expansion scenarios. The method provided by the embodiment of the present application, according to the logic aforementioned, distinguishes storage types of expanded memories that may be connected to the computing device. An expanded memory with a high bandwidth and a low latency and an expanded memory with a low bandwidth and a high latency are divided into two groups for more refined management. The method leverages strengths and avoids weaknesses to fully utilize advantages and features of memory of different storage types.

During the memory initialization stage after the computing device is powered on, the computing device detects whether the expanded memory is connected.

Understandably, when the expanded memory is a memory connected to the computing device by means of a memory slot of the computing device, the computing device may directly determine a storage type, a capacity, and an address range of the expanded memory.

For an expanded memory connected by means of the memory expander, after the expanded memory is connected to the computing device, if there is no corresponding configuration, the computing device uses the expanded memory and the corresponding memory expander as a single common device. In a case that the expanded memory is not identified, the computing device is unable to uniformly address and directly access the expanded memory.

Therefore, the computing device has to identify the expanded memory connected by means of the memory expander. For clear description, the expanded memory connected by means of the memory expander is referred to as a second expanded memory. It should be noted that the first expanded memory connected by means of the memory expander can also be referred to as the second expanded memory.

In this case, the processor of the computing device includes the expanded memory medium attribute identification module and the expanded memory address identification module.

Specifically, after the expanded memory address identification module identifies the expanded memory with the 'soft reserved' attribute, if the expanded memory is the second expanded memory connected by means of the memory expander, the expanded memory medium attribute identification module sends an 'identify' command to the memory expander by means of a corresponding driver of the memory expander and a mailbox mechanism of the CXL protocol, in order to obtain the description of the second expanded memory from the memory expander. The description includes a storage type and a capacity of the second expanded memory.

If the first expanded memory is DRAM, step 302 is performed.

If the first expanded memory is PMEM or SCM, step 303 is performed.

302. Use the first expanded memory as memory of a first non-uniform memory access (non-uniform memory access, NUMA) node.

The computing device adopts NUMA to manage access of the processor to the memory.

The first NUMA node is any one NUMA node with a CPU.

Understandably, during system initialization, the computing device assigns one or more CPUs of the processor and the local memory to one or more NUMA nodes. Each of the NUMA nodes contains the CPU and part of the local memory.

In a possible implementation, the computing device may first determine an address range of the first expanded memory, and then add the address range to the first NUMA node, to mount the first expanded memory on the first NUMA node.

As mentioned above, when the first expanded memory is an expanded memory connected by means of a memory slot in the computing device, the computing device directly determines the address range of the first expanded memory. The following explains a case where the first expanded memory is the second expanded memory connected by means of the memory expander.

Reference may be made to FIG. 4. FIG. 4 is a schematic flowchart of a method for identifying an address range of an expanded memory provided by an embodiment of the present application. The method is applied to a computing device in the system shown in FIG. 2, specifically including steps 401 to 406.

In this case, each memory expander may be connected to one or more second expanded memories.

Understandably, when a quantity of expanded memories is 1, the address range obtained by the expanded memory address identification module is an expanded memory address range that is identified by the expanded memory medium attribute identification module. Therefore, the method in the embodiment shown in FIG. 4 primarily focuses on determining the address range of the first expanded memory among a plurality of second expanded memories in a case where there are the plurality of second expanded memories. The embodiment is based on a case where a quantity of the second expanded memories connected to the computing device is N, where N is greater than 1.

401. The expanded memory address identification module obtains N segments of address ranges corresponding to N second expanded memories by means of UEFI firmware.

The expanded memory address identification module first identifies a second expanded memory with the 'soft reserved' attribute and obtains contiguous address ranges corresponding to all expanded memories by means of the UEFI firmware. According to a system resource affinity table (system resource affinity table, SRAT) and a system locality information table (system locality information table, SLIT) provided by the UEFI firmware, an address range corresponding to each second expanded memory can then be determined.

Specifically, the UEFI firmware is further configured to obtain information about the processor and the memory of the computing device, record the information about the processor and the information about the local memory and the expanded memory in the SRAT, and record distances between NUMA nodes within the computing device, where the distances are recorded in a node_distance[] array in the table.

Specifically, the expanded memory address identification module is configured to determine address segmentation points among different second expanded memories based on information recorded in both the SRAT and SLIT, and further to determine an address range corresponding to each second expanded memory.

Understandably, when the at least one expanded memory includes expanded memories connected by means of memory slots, the computing device first obtain address ranges of the expanded memories, then excludes the address ranges of the expanded memories from the continuous address ranges before determining the address range of each second expanded memory.

402. The expanded memory medium attribute identification module obtains capacities of the N second expanded memories from the memory expander.

In this case, the method for obtaining the capacity of the second expanded memory is similar to the description in step 301 of the embodiment shown in FIG. 3, which is not described herein again.

The computing device may perform step 401 before performing 402, or step 402 before step 401, or the computing device may perform steps 401 and 402 simultaneously. The embodiments of the present application do not limit the performance order between step 401 and step 402.

After obtaining the N segments of address ranges and capacities corresponding to the N second expanded memories, the computing device performs steps 403 to 407 to determine the address range of each second expanded memory based on the two factors and further determine the address range of the first expanded memory.

403. The computing device determines whether a capacity of the first expanded memory is same as capacities of other expanded memories among the N second expanded memories.

If all are different, perform step 404.

If the capacity of the first expanded memory is same as a capacity of at least one of the N second expanded memories, perform steps 405 to 406.

404. The computing device matches the capacity of the first expanded memory with the N segments of address ranges, and determines the address range of the first expanded memory.

The computing device may, by matching the capacities of the second expanded memories with the N segments of address ranges, determine a capacity corresponding to each segment of address range, and further determine an address range of each second expanded memory.

For example, suppose two expanded memories are connected to the computing device, the expanded memory address identification module obtains an address range A and an address range B, where the address range A is significantly smaller than the address range B. The expanded memory medium attribute identification module identifies that the two expanded memories are 16 G DRAM and 128 G PMEM, respectively. The computing device then matches the address ranges with capacities and determines that address range A can map to a 16 G storage space and the address range B can map to a 128 G storage space. Consequently, the computing device concludes that the expanded memory with a DRAM storage type corresponds to the address range A, and the expanded memory with a PMEM storage type corresponds to the address range B.

Understandably, during the performance of step 404, for the first expanded memory, the computing device determines the corresponding address range based on the capacity of the first expanded memory, and for the N second expanded memories connected to the computing device, after determining a relation between the capacity and the address range, the computing device sequentially use each second expanded memory as the first expanded memory to determine the address range of each second expanded memory.

405. The computing device obtains memory numbers of the N second expanded memories.

If the capacities of the expanded memories are same, sizes of their corresponding address ranges are also same, a corresponding relationship between the N second expanded memories and the N segments of address ranges can be determined based on the memory numbers of the expanded memories in the system of the computing device.

In this case, the memory numbers are numbers determined when the computing device detects the memories.

The computing device obtains the memory number of each second expanded memory from the SRAT.

406. The computing device, based on a sequence of N memory numbers and a sequence of the N segments of address ranges, as well as a memory number of the first expanded memory, determines the address range of the first expanded memory.

The address ranges are addresses ranges obtained by the computing device in step 401 and are uniformly addressed by the computing device. Understandably, a sequence in which the computing device addresses the expanded memories is consistent with a sequence of the memory numbers.

In another possible implementation, when capacities of the N expanded memories are not completely same, the second expanded memory with a capacity that does not match any of the other N expanded memories is referred to as a third expanded memory. The second expanded memory with a capacity that matches at least one of the other expanded memories is referred to as a fourth expanded memory. The computing device first determine an address range of the third expanded memory based on its capacity size, and then determines an address range of the fourth expanded memory based on the corresponding relation between the sequence of memory numbers and the sequence of address ranges. Alternatively, the computing device first determines the address range of the fourth expanded memory based on the corresponding relation between the sequence of memory numbers and the sequence of address ranges, and then determines the address range of the third expanded memory based on the capacity size.

In this case, the specific method for determining the address range of the expanded memory is similar to steps 404 to 407 in the embodiment shown in FIG. 4, which is not described herein again.

When the expanded memory is DRAM, to fully leverage low-latency and high-bandwidth advantages of the DRAM, the computing device uses the DRAM as a memory partition and adds same to the first NUMA node.

By using the DRAM as a memory partition and adding same to the first NUMA node with a CPU, the problem for the CPU to access the DRAM across different NUMA nodes can be avoided, thereby reducing the latency for CPU to access the expanded memory and leveraging the advantages of low latency and high bandwidth of the DRAM.

In a possible implementation, the first NUMA node is a NUMA node that is closest to the first expanded memory among the NUMA nodes with CPUs.

A distance between the first expanded memory and the first NUMA node is related to a speed at which the CPU in the first NUMA node accesses the first expanded memory. The faster the CPU in the first NUMA node accesses the first expanded memory, the shorter the distance between the first NUMA node and the first expanded memory.

When the computing device identifies the expanded memory as DRAM, the computing device may determine the third NUMA node that is closest to the expanded memory based on the local memory information, expanded memory information, and distance information between each NUMA node recorded in the SRAT and the SLIT. The computing device then adds the expanded memory as a memory partition ZONE_EXMEM to the third NUMA node.

Specifically, when generating a SLIT, the UEFI firmware uses the detected expanded memory as the memory of a NUMA node without a CPU and adds the detected expanded memory to the SLIT. The UEFI firmware then, according to the speed at which each CPU accesses the expanded memory, obtains a distance between each first NUMA node and the NUMA node where the expanded memory is located. Finally, distance data is recorded in a node distance array of the SLIT. When identifying that the expanded memory is DRAM, the computing device obtains information about the expanded memory from the SRAT and a distance between each first NUMA node and a node where the expanded memory is located from the SLIT, thereby determining the third NUMA node in the first NUMA node.

Understandably, after using the expanded memory as a memory partition of the third NUMA node, the computing device may change information in the SLIT.

By using the expanded memory as the memory partition and adding the expanded memory to the third NUMA node, a distance between the CPU and the expanded memory may be further reduced, increasing a CPU bandwidth in the third NUMA node and decreasing a latency for the CPU to access the expanded memory.

303. Add a new second NUMA node and use the first expanded memory as memory of the second NUMA node.

When the expanded memory is PMEM or SCM, to leverage characteristics of a large capacity with a higher latency of the PMEM or SCM, the computing device adds the new second NUMA node and uses the expanded memory as the memory of the second NUMA node, where the second NUMA node has no CPU.

During system initialization, the computing device allocates one or more CPUs and a local memory of the processor to one or more NUMA nodes. When detecting that the expanded memory has a storage type of PMEM or SCM, the computing device adds the second NUMA node and uses the expanded memory as the memory of the second NUMA node, where no CPU or local memory is allocated to the new second NUMA node. Understandably, no CPU and local memory will be allocated to the second NUMA node in a following node management process.

In a possible implementation, the computing device may first determine an address range of the first expanded memory, and then add the address range to the second NUMA node in order to mount the second expanded memory on the first NUMA node.

Understandably, the method that the computing device determines the address range of the first expanded memory is similar to the method described in steps 401 to 406 of the embodiment shown in FIG. 4. For details, reference may be made to the relevant content, which is not described herein again.

After the expanded memory is added to a memory pool of the computing device, the computing device may allocate the expanded memory to each application running on the computing device based on a memory request of the application.

In a possible embodiment, the computing device may migrate cold data to the memory of the second NUMA node and migrate hot data to the memory of the NUMA node with a CPU. Understandably, when the computing device detects an expanded memory with a storage type of DRAM, the computing device may also migrate the hot data to the memory of the first NUMA node.

By migrating cold data, which is infrequently active and not often accessed, to the memory of the second NUMA node away from the CPU, and by leveraging the large capacity of PMEM and SCM, a significant amount of space is freed up for hot data, which is frequently active and often accessed. This allows a large amount of hot data to be stored in the memory of the first NUMA node with a lower latency and a higher bandwidth, bringing the CPU closer to the hot data and increasing a speed that CPU accesses the hot data and a response speed to services that frequently use hot data.

For details, reference may be made to FIG. 5. FIG. 5 is a schematic flowchart illustrating a process for an application to request memory allocation provided by an embodiment of the present application.

As shown in FIG. 5, a software application of the computing device generates a memory demand during a startup or operation process and initiates a memory request to an OS kernel of the computing device by means of a memory allocator. Upon receiving the request, the kernel, based on the usage rates of the local memory, expanded memory DRAM, and expanded memory PMEM, allocates the local memory, expanded memory DRAM, and/or expanded memory PMEM to the software application according to a mapping relation between the memory and regions in the NUMA nodes within the kernel.

In the embodiment shown in FIG. 5, the expanded memory connected to the computing device is the expanded memory DRAM and the expanded memory PMEM.

In this case, the local memory of the computing device is mapped to a memory partition Zone_NORMAL in the first NUMA node of the kernel, the expanded memory DRAM is mapped to a memory partition Zone_EXMEM in a first NUMA node of the kernel, and the expanded memory PMEM is mapped to the memory of the second NUMA node in the kernel. In a possible implementation, suppose the expanded memories of the computing device are all DRAM, and the computing device receives a memory request from an application. If a usage rate of the local memory is less than a usage threshold, the local memory is allocated to the application according to the memory request. If the usage rate of the local memory is greater than the usage threshold, both the local memory and the expanded memory are allocated to the application according to the memory request and the proportion of available local memory to the expanded memory.

The usage threshold may be a threshold determined based on a memory capacity of the local memory.

For example, suppose the usage threshold is 50%, the local memory has a 16 G capacity, and the expanded memory DRAM has a 16 G capacity. When the usage rate of the local memory has reached 50%, the computing device receives a memory request from an application for a 900 M memory space. In this case, the available local memory is 8 G, and the expanded memory is 16 G, with an allocation proportion of 1:2. The computing device allocates a 300 M local memory and a 600 M expanded memory to the application according to the proportion.

In a possible implementation, the expanded memory of the computing device consists of PMEM or SCM, and the computing device receives a memory request from an application. If the usage rate of the local memory is less than 100%, the local memory is allocated to the application based on the memory request. If the usage rate of the local memory reaches 100%, the expanded memory is allocated to the application based on the memory request.

In another possible implementation, the at least one expanded memory includes at least one of PMEM or SCM, as well as DRAM, and the computing device receives the memory request from the application. If the usage rate of the local memory is less than the usage threshold, the local memory is allocated to the application according to the memory request. If the usage rate of the local memory is greater than the usage threshold and less than 100%, both the local memory and the DRAM are allocated to the application according to the memory request and the proportion of the available local memory to the DRAM. If the usage rate of the local memory reaches 100% and the usage rate of the DRAM is less than 100%, the DRAM is allocated to the application according to the memory request. If the usage rates of the local memory to the DRAM are both 100%, at least one of the PMEM or the SCM is allocated to the application according to the memory request.

By selecting different memory allocation strategies based on the usage rate of the local memory, a high bandwidth and a low latency characterizing the DRAM or HBM of the local memory and the first NUMA node may be leveraged. The method is intended to maximize a memory bandwidth and enhance a response speed and a processing speed of the CPU.

In the embodiments of the present application, by identifying the storage type of the expanded memory and implementing different management and allocation methods based on different storage types of the expanded memories, characteristic advantages of the expanded memories with different storage types are fully and flexibly utilized, and the memory bandwidths are maximized.

In another embodiment of the present application, a computer-readable storage medium is provided, which includes instructions that, when executed on a computer, enable a computer to perform the memory management method in the embodiment of FIG. 3 or FIG. 4.

Those skilled in the art may recognize that the units and algorithmic steps disclosed in the embodiments of the present application can be implemented in electronic hardware or a combination of computer software and electronic hardware. Whether these functions are executed in hardware or software depends on the specific application and design constraints of a technical solution. Professional technical personnel may adopt a different method for each specific application to implement the functions, but such an implementation shall not be considered beyond the scope of the present application.

It is clear to those skilled in the art that, for the sake of ease and brevity of description, the specific operation processes of the aforementioned system, apparatus, and unit may refer to the corresponding processes in the aforementioned methods of the embodiments, which is not described herein again.

In the several embodiments of the present application, it should be understood that the disclosed system, apparatus and method may be implemented in other manners. For example, the described apparatus embodiment is merely for illustrative purpose. For example, the division of unit is merely a logical function division. In actual implementation, there may be other division methods, such as multiple units or components may be combined or integrated into another system, or some features may be left out, or not performed. In addition, the displayed or discussed mutual couplings or direct couplings or communication connections may be implemented by using some interfaces, and the indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected according to actual requirements to achieve the objectives of the solutions of the embodiments.

In addition, functional units in the embodiments of the present application may be integrated into one processing unit, or each of the units may exist alone physically, or two or more units may be integrated into one unit.

When the functions are implemented in a form of a software functional unit and are sold or used as an independent product, the functions may be stored in a computer-readable storage medium. Based on such an understanding, the technical solutions in the present application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in the embodiments of the present application. The foregoing storage medium includes any medium that can store program code, such as a USB flash drive, a removable hard disk, a Read-Only memory (Read-Only Memory, ROM), a Random Access Memory (Random Access Memory, RAM), a magnetic disk, or an optical disc.

## Claims

1. A memory management method, applied to a computing device, wherein the computing device comprises at least one expanded memory, and the method comprises:
when detecting that a first expanded memory is connected, identifying a storage type of the first expanded memory, wherein the first expanded memory is any one of the at least one expanded memory;
if the first expanded memory is dynamic random access memory (DRAM), using the first expanded memory as memory of a first non-uniform memory access (NUMA) node, wherein the first NUMA node is any one node with a central processing unit (CPU); and
if the first expanded memory is persistent memory (PMEM) or storage-class memory (SCM), adding a second NUMA node and using the first expanded memory as memory of the second NUMA node, wherein the second NUMA node has no CPU.

2. The method according to claim 1, wherein using the first expanded memory as the memory of the first NUMA node specifically comprises:
determining an address range of the first expanded memory; and
adding the address range to the memory of the first NUMA node.

3. The method according to claim 1, wherein using the first expanded memory as the memory of the second NUMA node specifically comprises:
determining an address range of the first expanded memory; and
adding the address range to the memory of the second NUMA node.

4. The method according to claim 2 or 3, wherein the computing device further comprises a memory expander, the at least one expanded memory comprises N second expanded memories connected to the computing device by the memory expander, and the first expanded memory is any one of the N second expanded memories, wherein N is greater than 1; and determining the address range of the first expanded memory comprises:
obtaining, by unified extensible firmware (UEFI) firmware, N segments of address ranges corresponding to the N second expanded memories;
obtaining, from the memory expander, capacities of the N second expanded memories; and
determining, based on the N capacities and the N segments of address ranges, the address range of the first expanded memory.

5. The method according to claim 4, wherein, determining, based on the N capacities and the N segments of address ranges, the address range of the first expanded memory, specifically comprises:
if a capacity of the first expanded memory is different from capacities of other expanded memories among the N second expanded memories, determining the address range of the first expanded memory by matching the N segments of address ranges according to the capacity of the first expanded memory;
or,
if a capacity of the first expanded memory is same as a capacity of at least one of the N second expanded memories, obtaining memory numbers of the N second expanded memories; and determining the address range of the first expanded memory according to a sequence of the N memory numbers, a sequence of the N segments of address ranges, and a memory number of the first expanded memory.

6. The method according to any one of claims 1 to 5, wherein the first NUMA node is a NUMA node that is closest to the first expanded memory among NUMA nodes with CPUs.

7. The method according to any one of claims 1 to 6, wherein after using the first expanded memory as the memory of the second NUMA node, the method further comprises:
migrating cold data to the memory of the second NUMA node and migrating hot data to the memory of the NUMA node with the CPU.

8. The method according to any one of claims 1 to 7, wherein the computing device comprises a local memory; the at least one expanded memory comprises the DRAM; and after using the first expanded memory as the memory of the first NUMA node, the method further comprises:
receiving a memory request sent by an application;
if a usage rate of the local memory is less than a usage threshold, allocating, according to the memory request, the local memory to the application; and
if the usage rate of the local memory is greater than the usage threshold and less than 100%, allocating, according to the memory request, based on a proportion of available local memory to available DRAM, the local memory and the DRAM to the application.

9. The method according to claim 8, wherein the at least one expanded memory further comprises at least one of the PMEM and the SCM, and after receiving a memory allocation request sent by the application, the method further comprises:
if the usage rates of the local memory and the DRAM are both 100%, allocating, according to the memory request, at least one of the PMEM and the SCM to the application.

10. The method according to any one of claims 1 to 9, wherein the at least one expanded memory communicates data with a processor of the computing device through a computer express link (CXL) protocol.

11. A computing device, comprising a processor and at least one expanded memory;
wherein the processor is configured to, when detecting that a first expanded memory is connected, identify a storage type of the first expanded memory, and the first expanded memory is any one of the at least one expanded memory;
the processor is further configured to, when the first expanded memory is DRAM, use the first expanded memory as memory of a first NUMA node; and the first NUMA node is any one node with a CPU; and
the processor is further configured to, when the first expanded memory is PMEM or SCM, add a second NUMA node, and use the first expanded memory as memory of the second NUMA node, and the second NUMA node has no CPU.

12. The computing device according to claim 11, wherein the processor is specifically configured to, when the first expanded memory is the DRAM, determine an address range of the first expanded memory, and add the address range to the memory of the first NUMA node.

13. The computing device according to claim 11, wherein the processor is specifically configured to, when the first expanded memory is the PMEM or the SCM, determine an address range of the first expanded memory; and add the address range to the memory of the second NUMA node.

14. The computing device according to claim 12 or 13, wherein the computing device further comprises a memory expander, the at least one expanded memory comprises N second expanded memories connected to the computing device by the memory expander, and the first expanded memory is any one of the N second expanded memories, wherein N is greater than 1; the processor is specifically configured to:
obtain, by UEFI firmware, N segments of address ranges corresponding to the N second expanded memories;
obtain, from the memory expander, capacities of the N second expanded memories; and
determine, based on the N capacities and the N segments of address ranges, the address range of the first expanded memory.

15. The computing device according to claim 14, the processor is specifically configured to, when a capacity of the first expanded memory is different from capacities of other expanded memory among the N second expanded memories, determine the address range of the first expanded memory by matching the N segments of address ranges according to the capacity of the first expanded memory;
or,
the processor is specifically configured to, when a capacity of the first expanded memory is same as a capacity of at least one of the N second expanded memories, obtain memory numbers of the N second expanded memories; and determine the address range of the first expanded memory according to a sequence of the N memory numbers, a sequence of the N segments of address ranges, and a memory number of the first expanded memory.

16. The computing device according to any one of claims 11 to 15, wherein the first NUMA node is a NUMA node that is closest to the first expanded memory among NUMA nodes with CPUs.

17. The computing device according to any one of claims 11 to 16, wherein the processor is further configured to migrate cold data to the memory of the second NUMA node, and migrate hot data to the memory of the NUMA node with the CPU.

18. The computing device according to any one of claims 11 to 17, wherein the computing device comprises a local memory; the at least one expanded memory comprises the DRAM; and the processor is further configured to:
receive a memory request sent by an application;
if a usage rate of the local memory is less than a usage threshold, allocate, according to the memory request, the local memory to the application; and
if the usage rate of the local memory is greater than the usage threshold and less than 100%, allocate, according to the memory request, the local memory and the DRAM to the application based on a proportion of available local memory to available DRAM.

19. The computing device according to claim 18, wherein the at least one expanded memory further comprises at least one of the PMEM and the SCM, and the processor is further configured to:
if the usage rates of the local memory and the DRAM are both 100%, allocate, according to the memory request, at least one of the PMEM and the SCM to the application.

20. The computing device according to any one of claims 11 to 19, wherein the at least one expanded memory communicates data with the processor according to a CXL protocol.
